# EUROPEAN PATENT APPLICATION

(11) **EP 3 337 231 A1**
(43) Date of publication of application: **20.06.2018**
(21) Application number: 16835130.2
(22) Date of filing: 08.08.2016
(51) Int. Cl.: H04W 28/04, H04L 1/16, H04W 16/14, H04W 72/04, H04W 74/08

(54) **USER TERMINAL, WIRELESS BASE STATION, AND WIRELESS COMMUNICATION METHOD**

(30) Priority: 13.08.2015 JP 2015159889
(71) Applicant: NTT DOCOMO, INC., Chiyoda-ku Tokyo 100-6150 (JP)
(72) Inventor: HARADA, Hiroki, Tokyo 100-6150 (JP); NAGATA, Satoshi, Tokyo 100-6150 (JP); WANG, Lihui, Beijing 100190 (CN); LIU, Liu, Beijing 100190 (CN); JIANG, Huiling, Beijing 100190 (CN)
(74) Representative: Hoffmann Eitle
(86) International application number: PCT/JP2016/073261
(87) International publication number: WO 2017/026433

(57) **Abstract**

The present invention is designed so that communication can be carried out adequately even in a carrier where LBT is executed. According to one aspect of the present invention, a user terminal communicates by using a first cell and a second cell, the second cell executing listening before transmitting signals, and the user terminal has a receiving section that receives a random access response (RAR) in the first cell, a transmission section that, after the RAR is received, transmits an uplink signal in an uplink shared channel of the second cell, and a control section that performs retransmission control over the uplink signal, and the control section acquires information related to a hybrid automatic repeat request (HARQ) process number that corresponds to the uplink signal, and performs retransmission control over the uplink signal by using the HARQ process number.

## Description

### Technical Field

The present invention relates to a user terminal, a radio base station and a radio communication method in next-generation mobile communication systems.

### Background Art

ln the UMTS (Universal Mobile Telecommunications System) network, the specifications of long term evolution (LTE) have been drafted for the purpose of further increasing high speed data rates, providing lower delays and so on (see non-patent literature 1). In addition, successor systems of LTE (referred to as, for example, "LTE-A" (LTE-Advanced), "FRA" (Future Radio Access), "5G" (5th generation mobile communication system) and so on) are also under study for the purpose of achieving further broadbandization and increased speed beyond LTE.

The specifications of Rel. 8 to 12 LTE have been drafted assuming exclusive operations in frequency bands that are licensed to operatorsthat is, licensed bands. As licensed bands, for example, 800 MHz, 2 GHz, 1.7 GHz and 2 GHz are used.

In recent years, user traffic has been increasing steeply following the spread of high-performance user terminals (UE: User Equipment) such as smart-phones and tablets. Although more frequency bands need to be added to meet this increasing user traffic, licensed bands have limited spectra (licensed spectra).

Consequently, a study is in progress with Rel. 13 LTE to enhance the frequencies of LTE systems by using bands of unlicensed spectra (also referred to as "unlicensed bands") that are available for use apart from licensed bands (see non-patent literature 2). For unlicensed bands, for example, the 2.4 GHz band and the 5 GHz band, where Wi-Fi (registered trademark) and Bluetooth (registered trademark) can be used, are under study for use.

To be more specific, with Rel. 13 LTE, a study is in progress to execute carrier aggregation (CA) between licensed bands and unlicensed bands. Communication that is carried out by using unlicensed bands with licensed bands like this is referred to as "LAA" (License-Assisted Access). Note that, in the future, dual connectivity (DC) between licensed bands and unlicensed bands and stand-alone in unlicensed bands may become the subject of study under LAA.

For unlicensed bands in which LAA is run, a study is in progress to introduce interference control functionality in order to allow co-presence with other operators' LTE, Wi-Fi or different systems. In Wi-Fi, LBT (Listen Before Talk), which is based on CCA (Clear Channel Assessment), is used as an interference control function within the same frequency. LBT refers to the technique of "listening" (sensing) before transmitting signals, and controlling transmission based on the result of listening. In Japan and Europe, the LBT function is stipulated as mandatory in systems such as Wi-FI that is run in the 5 GHz unlicensed band.

### Citation List

### Non-Patent Literature

Non-Patent Literature 1: 3GPP TS 36. 300 "Evolved Universal Terrestrial Radio Access (E-UTRA) and Evolved Universal Terrestrial Radio Access Network (E-UTRAN); Overall Description; Stage 2"
Non-Patent Literature 2: AT&T, Drivers, Benefits and Challenges for LTE in Unlicensed Spectrum, 3GPP TSG-RAN Meeting #62 RP to 131701

### Summary of Invention

### Technical Problem

Now, there are cases where random access (RA) procedures are carried out even in unlicensed band cells in order to adjust uplink transmission timings. Here, after the random access response (RAR) transmitted in RA procedures is received, uplink transmission can be controlled based on the UL grants included in the RAR.

However, when conventional random access procedures are used in an environment in which LBT is employed, there is a threat of producing inconsistencies in the recognition of the HARQ (Hybrid Automatic Repeat reQuest) process, which then raises of problem that uplink transmission/retransmission cannot be carried out properly by using UL grants included in RARs. In this case, the spectral efficiency and throughput decrease, which then disables proper communication.

The present invention has been made in view of the above, and it is therefore an object of the present invention to provide a user terminal, a radio base station and a radio communication method that allow adequate communication even in carriers (for example, unlicensed bands) that execute LBT (pre-transmission listening).

### Solution to Problem

One aspect of the present invention provides a user terminal that communicates by using a first cell and a second cell, the second cell executing listening before transmitting signals, and the user terminal has a receiving section that receives a a random access response (RAR) in the first cell, a transmission section that, after the RAR is received, transmits an uplink signal in an uplink shared channel of the second cell, and a control section that performs retransmission control over the uplink signal, and, in the user terminal, the control section acquires information related to a hybrid automatic repeat request (HARQ) process number that corresponds to the uplink signal, and performs retransmission control over the uplink signal by using the HARQ process number.

### Advantageous Effects of Invention

According to the present invention, communication can be carried out adequately even in carries that execute LBT.

### Brief Description of Drawings

FIG. 1 is a diagram to show an example sequence of random access procedures in an LAA SCell;
FIG. 2 is a diagram to show the RAR MAC PDU format in existing LTE systems;
FIG. 3A is a diagram to show the conventional MAC RAR format, and FIG. 3B is a diagram to show the format of UL grants contained in the MAC RAR;
FIG. 4 is a diagram to show an example sequence of random access procedures in an LAA SCell according to embodiment 1.1;
FIG. 5A is a diagram to show an example of the MAC RAR format according to embodiment 1.1, and FIG. 5B is a diagram to show another example of the MAC RAR format according to embodiment 1.1;
FIG. 6 is a diagram to show an example of the RAR MAC PDU format according to embodiment 1.1;
FIG. 7A is a diagram to show an example of the MAC RAR format according to embodiment 1.2, and FIG. 7B is a diagram to show another example the MAC RAR format according to embodiment 1.2;
FIG. 8 is a diagram to show an example of the MAC RAR format according to embodiment 1.3;
FIG. 9 is a diagram to show an example of the MAC RAR format according to embodiment 1.4;
FIG. 10A is a diagram to show an example of the MAC RAR format according to a variation of embodiment 1.2, and FIG. 10B is a diagram to show another example of the MAC RAR format according to a variation of embodiment 1.2;
FIG. 11 is a diagram to show an example of assignment of HPNs according to embodiment 2.1;
FIG. 12 is a diagram to show an example sequence of random access procedures according to embodiment 2.2;
FIG. 13 is a diagram to show an example of a DCI format including an HPN, according to embodiment 2.2;
FIG. 14 is a diagram to show an example of a schematic structure of a radio communication system according to an embodiment of the present invention;
FIG. 15 is a diagram to show an example of an overall structure of a radio base station according to an embodiment of the present invention;
FIG. 16 is a diagram to show an example of a functional structure of a radio base station according to an embodiment of the present invention;
FIG. 17 is a diagram to show an example of an overall structure of a user terminal according to an embodiment of the present invention; and
FIG. 18 is a diagram to show an example of a functional structure of a user terminal according to an embodiment of the present invention.

### Description of Embodiments

As mentioned earlier, in systems (for example, LAA systems) that run LTE/LTE-A in unlicensed bands, interference control functionality is likely to be necessary in order to allow co-presence with other operators' LTE, Wi-Fi, or other different systems. Note that, systems that run LTE/LTE-A in unlicensed bands may be collectively referred to as "LAA," "LAA-LTE," "LTE-U," "U-LTE" and so on, regardless of whether the mode of operation is CA, DC or SA.

Generally speaking, when a transmission point (for example, a radio base station (eNB), a user terminal (UE) and so on) that communicates by using a carrier (which may also be referred to as a "carrier frequency," or simply a "frequency") of an unlicensed band detects another entity (for example, another UE) that is communicating in this unlicensed band carrier, the transmission point is disallowed to make transmission in this carrier.

In this case, the transmission point executes listening (LBT) at a timing that is a predetermined period ahead of the transmission timing. To be more specific, by executing LBT, the transmission point searches the whole applicable carrier band (for example, one component carrier (CC)) at a timing that is a predetermined period ahead of the transmission timing, and checks whether or not other devices (for example, radio base stations, UEs, Wi-Fi devices and so on) are communicating in this carrier band.

Note that, in the present description, "listening" refers to the operation which a given transmission point (for example, a radio base station, a user terminal, etc.) performs before transmitting signals in order to check whether or not signals to exceed a predetermined level (for example, predetermined power) are being transmitted from other transmission points. Also, this "listening" performed by radio base stations and/or user terminals may be referred to as "LBT," "CCA," "carrier sensing" and so on.

The transmission point then carries out transmission using this carrier only if it is confirmed that no other devices are communicating. If the received power measured during LBT (the received power during the LBT period) is equal to or lower than a predetermined threshold, the transmission point judges that the channel is in the idle state (LBT_{idle}), and carries out transmission. When a "channel is in the idle state," this means that, in other words, the channel is not occupied by a specific system, and it is equally possible to say that a channel is "idle," a channel is "clear," a channel is "free," and so on.

On the other hand, if only just a portion of the target carrier band is detected to be used by another device, the transmission point stops its transmission. For example, if the transmission point detects that the received power of a signal from another device entering this band exceeds a threshold, the transmission point judges the channel is in the busy state (LBT_{busy}), and makes no transmission. In the event LBT_{busy} is yielded, LBT is carried out again with respect to this channel, and the channel becomes available for use only after it is confirmed that the channel is in the idle state. Note that the method of judging whether a channel is in the idle state/busy state based on LBT is by no means limited to this.

As LBT schemes, FBE (Frame Based Equipment) and LBE (Load Based Equipment) are currently under study. Differences between these include the frame configurations to use for transmission/receipt, the channel-occupying time, and so on. In FBE, the LBT-related transmitting/receiving configurations have fixed timings. Also, in LBE, the LBT-related transmitting/receiving configurations are not fixed in the time direction, and LBT is carried out on an as-needed basis.

To be more specific, FBE has a fixed frame cycle, and is a mechanism of carrying out transmission if the result of executing carrier sensing for a certain period (which may be referred to as "LBT duration" and so on) in a predetermined frame shows that a channel is available for use, and not making transmission but waiting until the next carrier sensing timing if no channel can be used.

On the other hand, LBE refers to a mechanism for implementing the ECCA (Extended CCA) procedure of extending the carrier sensing duration when the result of carrier sensing (initial CCA) shows that the channel cannot be used, and continuing executing carrier sensing until the channel becomes available for use. In LBE, random backoff is required to avoid contention adequately.

Note that the carrier sensing duration (also referred to as the "carrier sensing period") refers to the time (for example, the duration of one symbol) it takes to gain one LBT result by performing listening and/or other processes and deciding whether or not a channel can be used.

A transmission point can transmit a predetermined signal (for example, a channel reservation signal) based on the result of LBT. Here, the result of LBT refers to information about the state of channel availability (for example, "LBT_{idle}," "LBT_{busy}," etc.), which is acquired by LBT in carriers where LBT is configured.

As described above, by introducing interference control for use within the same frequency that is based on LBT mechanisms to transmission points in LAA systems, so that it is possible to prevent interference between LAA and Wi-Fi, interference between LAA systems and so on. Furthermore, even when transmission points are controlled independently per operator that runs an LAA system, it is possible to reduce interference without learning the details of each operator's control, by means of LBT.

Now, there are cases where, even in unlicensed band cells, random access (RA) procedures have to be carried out in order to adjust uplink transmission timings. For example, when the distance from a UE to a radio base station that forms an unlicensed band SCell (Secondary Cell) is different from the distance from the UE to a radio base station that forms a licensed band PCell (Primary Cell), the transmission timings of the SCell are likely to be different from the transmission timings of the PCell. Note that the unlicensed band SCell will be hereinafter referred to also as "LAA SCell," for example.

To adjust the timings of the LAA SCell, given that the UE has already established an RRC connection with the PCell, the LAA SCell is likely to cooperate with the PCell and execute contention-free RA (CFRA). Note that contention-free RA may be also referred to as "non-CBRA" (non-Contention-Based Random Access).

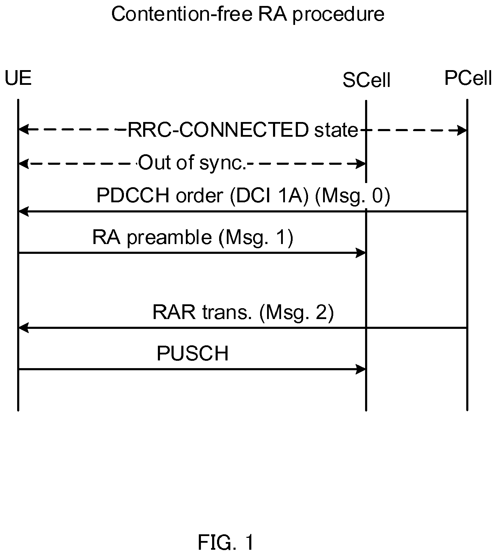

The present inventors have found out that execution of LBT in LAA SCells produces problems that have never existed heretofore. These problems will be described below in detail with reference to FIGs. 1 to 3.

FIG. 1 is diagram to show an example sequence of random access procedures in an LAA SCell. In the initial state in FIG. 1, while a UE is in the RRC-connected state with a PCell, the UE is in an unsynchronized state with an SCell (LAA SCell). Also, although example cases will be described below in which CA is executed using a PCell and an SCell, DC may be employed as well.

Referring to the example of FIG. 1, on the network end (for example, an eNB), a downlink L1/L2 control channel (PDCCH: Physical Downlink Control Channel) to command transmission of a random access channel (PRACH: Physical Random Access Channel) in the SCell is transmitted from the PCell to the UE (message (Msg.) 0).

Message 0 contains information that relates to PRACH transmission, such as UE-specific random access preambles (RA preambles), and is reported in DCI (Downlink Control Information) format 1A. Message 0 may be referred to as the signal for starting contention-free random access.

Next, the UE transmits an RA preamble (PRACH) in the SCell based on the PDCCH that has been received (message 1). After having transmitted the PRACH, the UE tries to receive the DCI for the RAR in response to the PRACH (the DCI to use to specify the resource for receiving the RAR) for a predetermined period. The period in which the UE tries to receive the DCI for the RAR may be referred to as the RAR window. When the UE fails to receive the PDCCH for the RAR in the RAR window, the UE may retransmit the PRACH.

Meanwhile, on the network end, when the RA preamble transmitted from the UE is detected in the SCell, a random access response (RAR) is transmitted in the PCell (message 2). Note that the transmission of the RAR includes transmitting the DCI for the RAR in the PDCCH, and transmitting a MAC PDU (Medium Access Control Protocol Data Unit) that represents the RAR in the PDSCH. The DCI for the RAR is transmitted in a common search space (CSS).

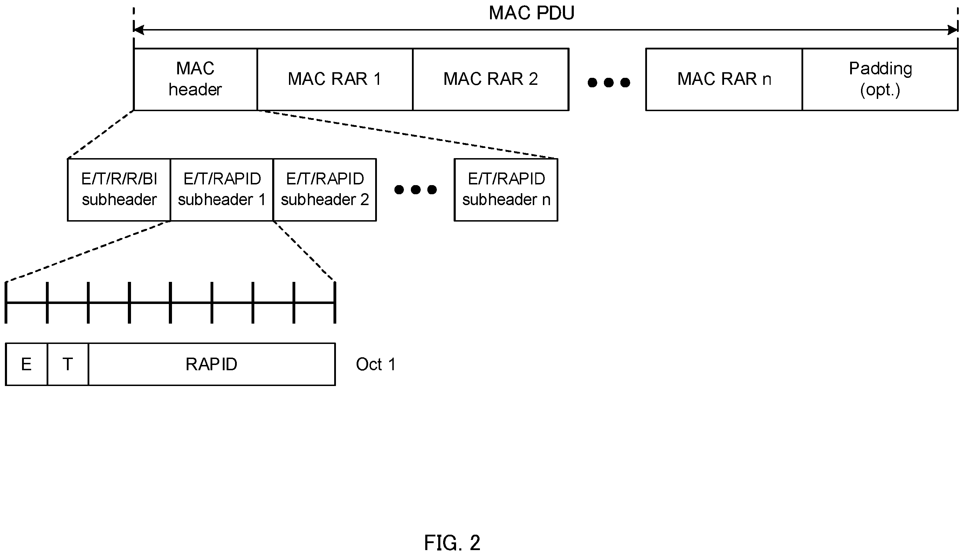

FIG. 2 is a diagram to show the RAR MAC PDU format of existing LTE systems. As shown in FIG. 2, the conventional RAR MAC PDU (used in Rel. 12 or earlier LTE systems) is formed by including one or more MAC subheaders, which indicate identifiers (for example, RAPIDs (Random Access Preamble Identifiers)) equivalent to RA preamble identifiers (RA-RNTIs: Random Access Radio Network Temporary Identifiers), in a MAC header, and by including MAC RARs that correspond to these RAPIDs. Here, an RAPID is an identifier included in a MAC subheader, and is represented by six bits.

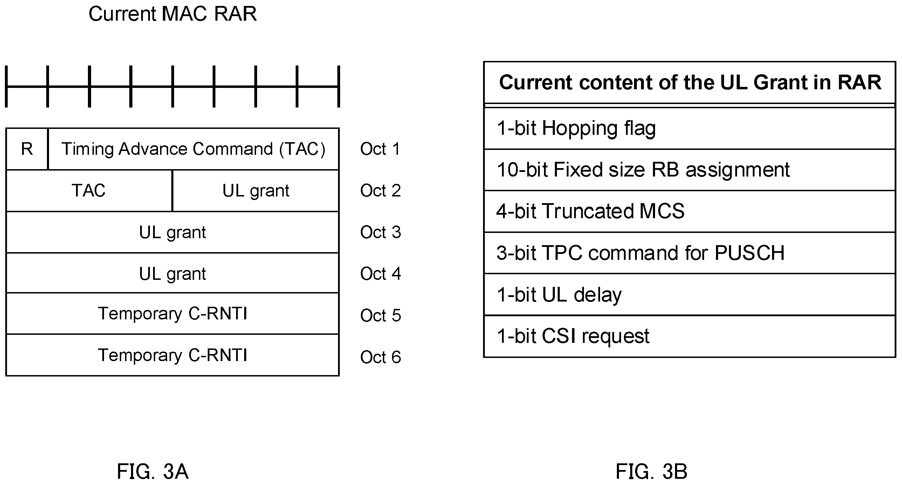

FIGs. 3 provide a diagram to show the MAC RAR format in existing LTE systems. FIG. 3A shows the conventional MAC RAR format (in Rel. 12 or earlier LTE systems). The conventional MAC RAR is formed with six octets (= 48 bits). To be more specific, the MAC RAR includes a 1-bit reserved (R: Reserved) field, a 11-bit timing advance command (TAC) field, a 20-bit UL (uplink) grant field and a 16-bit TC-RNTI (Temporary Cell Radio Network Temporary Identifier) field.

Note that the reserved field does not necessarily have to be used to report information, and can be used freely. For the specification, the reserved field may be fixed to a predetermined value (for example, 0). When the reserved field is fixed to a predetermined value, it is possible to see this bit as a virtual error detection bit in the error correction decoding stage (that is, if this bit does not have the predetermined value, it is then possible to judge that the whole MAC RAR is an error, discard this MAC RAR, and request retransmission).

Also, the TAC field includes information for controlling uplink transmission timings, and the TC-RNTI field includes temporary information for identifying a terminal (temporary terminal identifier).

FIG. 3B shows the format of UL grants included in the MAC RAR. A UL grant includes a 1-bit hopping flag field, a 10-bit fixed-size RB (resource block) assignment field, a 4-bit truncated MCS (TMCS: Truncated Modulation and Coding Scheme) field, a 3-bit physical uplink shared channel (PUSCH: Physical Uplink Shared Channel) TPC (Transmit Power Control) command, a 1-bit UL delay field and a 1-bit CSI request field.

By using the TAC included in the RAR received, the UE adjusts the timing of uplink transmission. By this means, contention-free random access procedures are complete, and a connection with the SCell is established.

Also, the UE can make uplink transmission after the RAR is received based on the UL grants included in the RAR. For example, the UE can transmit aperiodic CSI (Channel State Information), predetermined MAC control information (CEs (Control Elements)), data and so on. A PHR (Power Headroom Report) MAC CE, a BSR (Buffer Status Report) MAC CE and so on may be transmitted as MAC CEs.

Now, when, for example, the result of LBT in a UE and an eNB always shows LBT_{idle}, the HARQ (Hybrid Automatic Repeat reQuest) process in response to RAR UL grant-induced uplink transmission is synchronous HARQ. That is, ACK/NACK reports from the eNB, retransmissions from the UE and so on are sent or carried out at predetermined timings, so that the UE and the eNB both can recognize the HARQ process in a consistent way.

While ACK/NACK reports can be implemented in fixed timings by transmitting in the PCell, in uplink transmission in an LAA SCell, retransmission cannot always assume a fixed timing due to LBT. In this way, the use of conventional random access procedures in a carrier where LBT is configured has a threat of producing inconsistencies in the recognition of the HARQ process, which then raises a problem that uplink transmission/retransmission cannot be carried out properly by using UL grants included in RARs.

So, assuming the case where random access procedures are carried out in a carrier where LBT is configured, the present inventors have come up with the idea of allowing a UE to recognize the HARQ process with respect to uplink signals that are transmitted, after a RAR is received, in a carrier where LBT is configured (for example, the PUSCH corresponding to a UL grant included in the RAR).

Now, embodiments of the present invention will be described in detail below with reference to the accompanying drawings. Although examples will be described with each embodiment below where CA is executed assuming that the PCell is a licensed band and an SCell is an unlicensed band, this is by no means limiting.

That is, embodiments of the present invention can be configured so that a structure to make a licensed band (and the PCell) a carrier where listening (LBT) is not configured (which may also be referred to as a carrier that does not or cannot execute LBT), and make an unlicensed band (and an SCell) a carrier where listening (LBT) is configured (which may also be referred to as a carrier that executes or should execute LBT) can be used in each embodiment. Also, the combination of carriers where LBT is not configured and carriers where LBT is configured, and PCells and SCells are not limited to that given above.

Note that, although, in the following description, the number of HARQ processes is maximum eight and the uplink HPN field is three bits unless specified otherwise, this is by no means limiting. For example, the HPN field can be four bits or more.

### (Radio communication method)

### <First embodiment>

The first embodiment of the present invention relates to modification of the MAC RAR format.

### <Method 1 of the first embodiment (embodiment 1.1)>

In embodiment 1.1, apart from the RAR, downlink control information (UL grants) to include a HARQ process number (HPN: HARQ Process Number) is reported, on a per UE basis, in order to enable asynchronous HARQ. A UL grant to include an HPN may be formed with, for example, information which enhances/changes conventional DCI format 0/4, or may be formed in a new DCI format.

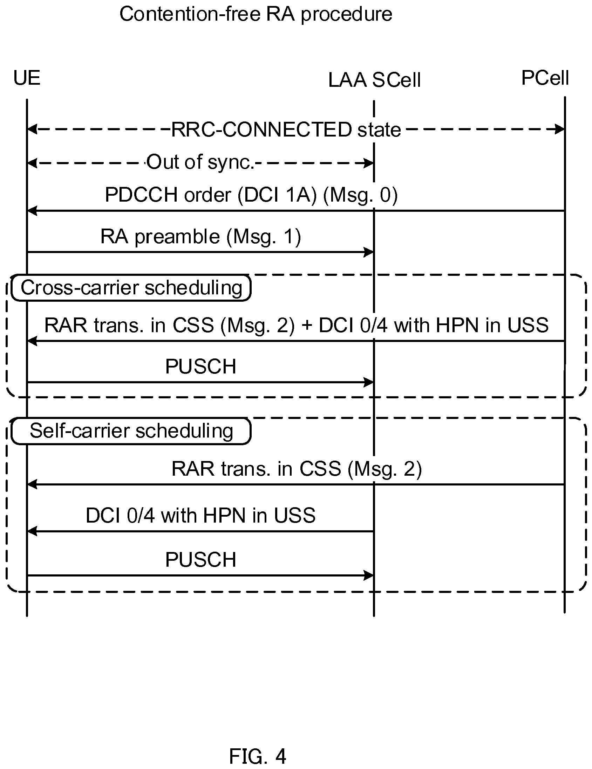

FIG. 4 is a diagram to show an example sequence of random access procedures in an LAA SCell according to embodiment 1.1. FIG. 4 is the same as FIG. 1 up to the transmission of an RA preamble. FIG. 4 shows an example of sending an SCell' UL grant from a PCell by way of cross-carrier scheduling (CCS), and an example of sending a UL grant in the SCell by way of self-carrier scheduling (SCS). UL grants to include an HPN can be reported by using either scheduling.

In the event of CCS from the PCell, a UL grant for the UE (for example, DCI format 0/4 with an HPN attached thereto) is reported at the same time the RAR is transmitted, or at an earlier or later timing, in a user-specific search space (USS: UE-specific Search Space) of the PCell. In the event of SCS form the SCell, a UL grant for the UE (for example, DCI format 0/4 with an HPN attached thereto) is reported at the same time the PCell's RAR is transmitted, or at an earlier or later timing, in a USS of the SCell.

The UE disregards the UL grants include in the RAR, and, meanwhile, carries out PUSCH transmission after the RAR (for example, the first PUSCH transmission after the RAR) based on the UL grants reported in the USS of the PCell or SCell

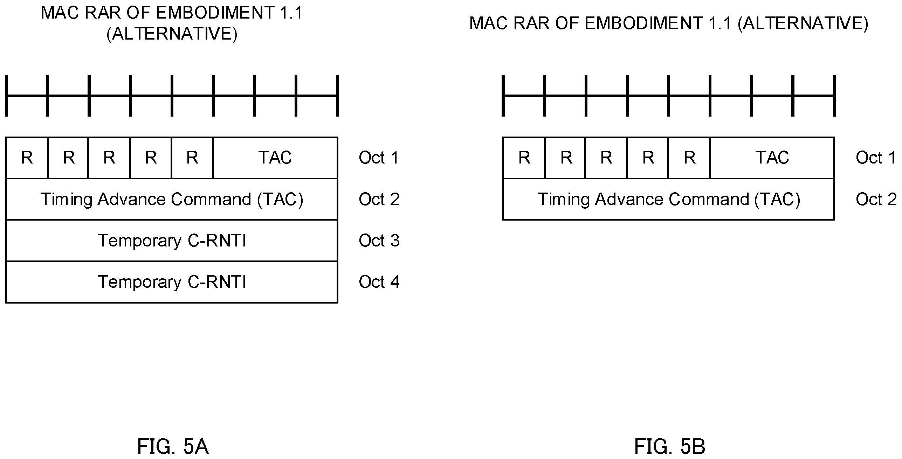

With embodiment 1.1, it is preferable to structure the RAR format not to include a UL grant field. FIG. 5 is a diagram to show an example of the MAC RAR format according to embodiment 1.1. In comparison to the MAC RAR of FIG. 3, the UL grant field is removed from the MAC RAR of FIG. 5A. Since MAC signaling needs to be formed in octets due to format restrictions, the MAC RAR of FIG. 5A attaches four reserved bits to the first octet, making a total of four octets.

FIG. 5B is a diagram to show another example of the MAC RAR format according to embodiment 1.1. FIG. 5B shows a structure, in which the TC-RNTI field is furthermore removed from the MAC RAR of FIG. 5A. The UE has established an RRC connection and already has a valid C-RNTI, and therefore a TC-RNTI needs not be included in the RAR, as shown in FIG. 5B. That is, with embodiment 1.1, it is possible to use a structure including only a TAC field (and reserved fields) as the RAR format. The MAC RAR of FIG. 5B is formed with total two octets.

Note that the MAC RARs of embodiment 1.1 shown in FIG. 5 have a different size (bit length) than heretofore, so that it is preferable to enable a UE to recognize when an RAR of a different size is included. This recognition may be made possible based on RAPIDs. For example, it is possible to divide RAPIDs into two groups (RAPID groups), assign RAPIDs to indicate the MAC RAR of embodiment 1.1 from one group, and assign RAPIDs to indicate the conventional MAC RAR (the MAC RAR in a size of six octets) from the other group.

In this way, the RAPIDs for the RAR of embodiment 1.1 may be configured to be reserved apart from the RAPIDs for the conventional RAR (the RAPIDs for the RAR of embodiment 1.1 are not used in place of the RAPIDs for the conventional RAR). That is, MAC subheader identifiers (for example, RAPIDs) that support the RAR of embodiment 1.1 may be determined from different candidates (RAPID group) from those of MAC subheader identifiers that support the conventional RAR having a size of six octets. By this means, it is possible to prevent misrecognition with the conventional RAR format.

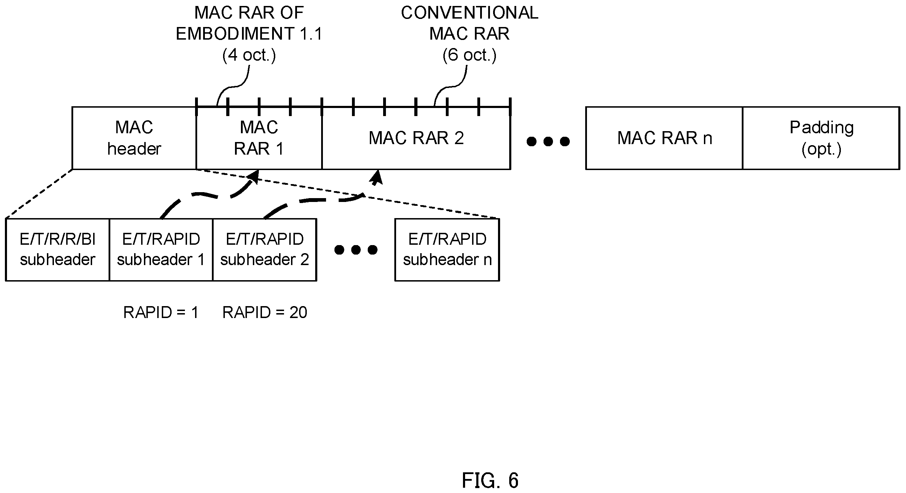

FIG. 6 is a diagram to show an example of the RAR MAC PDU format according to embodiment 1.1. In the example of FIG. 6, among RAPIDs 0 to 63, 0 to 9 are made the RAPIDs for the MAC RAR of embodiment 1.1 (for LAA SCells), and the remaining 10 to 63 are made the RAPIDs for the conventional MAC RAR (for the licensed band cell).

E/T/RAPID subheader 1 includes RAPID = 1, and MAC RAR 1 that corresponds to subheader 1 is the MAC RAR of embodiment 1.1 (having, for example, a size of four octets). E/T/RAPID subheader 2 includes RAPID=20, and MAC RAR 2 that corresponds to subheader 2 is the conventional MAC RAR (having, for example, a size of six octets). For example, MAC RAR 1 corresponds to UE 1 that transmits the PRACH in the LAA SCell, and MAC RAR 2 corresponds to UE 2 that transmits the PRACH in the licensed band.

As described above, according to embodiment 1.1, UL grants to include an HPN are reported, and PUSCH transmission/retransmission is controlled based on these UL grants. By this means, it is possible to execute adequate HARQ control with respect to uplink transmission after the RAR. Also, by removing (and/or reducing) the information that SCells do not need to receive (the UL grant field, the TC-RNTI field and so on) from the RAR, it is possible to reduce the amount of information pertaining to RAR reporting, and reduce the decrease of spectral efficiency.

### <Method 2 of the first embodiment (embodiment 1.2)>

Embodiment 1.2 employs a structure to include information related to an HPN is included in RAR UL grants. In this case, a UE controls PUSCH transmission/retransmission based on UL grants included in the RAR, and therefore does not have to receive UL grants apart from the RAR.

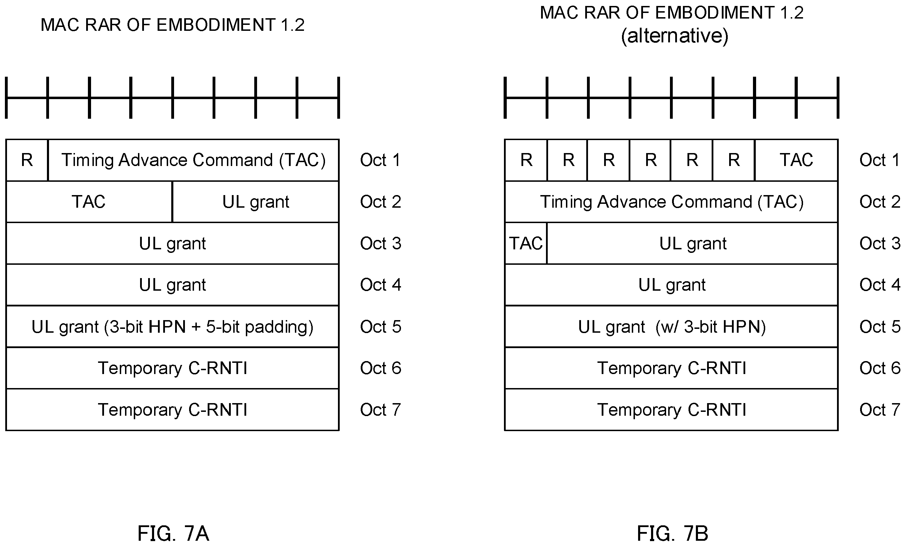

FIG. 7 is a diagram to show an example of the MAC RAR format according to embodiment 1.2. In comparison to the MAC RAR of FIG. 3A, in the MAC RAR of FIG. 7A, the UL grant field is expanded. Given that the MAC RAR needs to be formed in octets based on the format of MAC signaling, the MAC RAR of FIG. 7A includes 5-bit padding in the fifth octet, in addition to a 3-bit HPN field, giving a total of seven octets.

FIG. 7B shows a structure in which the location of the HPN field is different from FIG. 7A. The 3-bit HPN field is inserted in the fifth octet by being attached to the tail of the UL grant. Also, instead of padding, five bits are included in the first octet as reserved bits.

Note that, since, similar to embodiment 1.1, the RAR of embodiment 1.2 has a different size from that of the conventional RAR, it is also possible to provide a structure in which the RAPIDs for the RAR of embodiment 1.2 are reserved apart from the RAPIDs for the conventional RAR.

As described above, according to embodiment 1.2, it is not necessary to report UL grants apart from the RAR, so that it is possible to reduce the decrease of spectral efficiency.

### < Method 3 of the first embodiment (embodiment 1.3)>

With embodiment 1.3, part of the TAC field in the conventional RAR is used as an HPN field. To be more specific, the TAC bits are reduced, and the reduced bits are used for an HPN. In this case, a UE controls PUSCH transmission/retransmission based on UL grants included in the RAR, and therefore does not have to receive UL grants apart from the RAR.

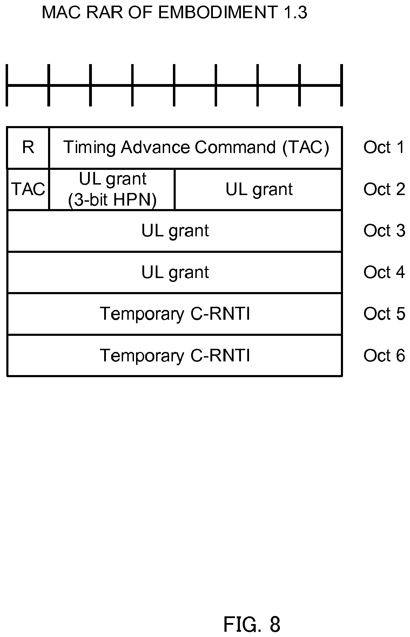

FIG. 8 is a diagram to show an example of the MAC RAR format according to embodiment 1.3. In comparison to the MAC RAR of FIG. 3A, in the MAC RAR of FIG. 8, the number of TAC bits is reduced from eleven bits to eight bits, and, in the second octet, the last three bits of the TAC that are reduced are re-defined as an HPN field.

Although, according to embodiment 1.3, the values TACs can assume range from 0 to 2⁸ - 1, unlike the conventional range of 0 to 1282, this can support cell radii up to approximately 20 km, and therefore is likely to be sufficient for the operation of SCell. To be more specific, the amount of time control N_{TA} can be determined from N_{TA} = T_{A} × 16T_{S} = T_{A} × 0.52 [µs], and, if T_{A} is substituted by 2⁸ - 1 and the speed of propagation of light is taken into account, the radius that can be supported with respect to uplink signals is (2⁸ - 1) × 0.52/0.67 = 19.8 [km].

As described above, according to embodiment 1.3, part of the conventional TAC field is used as an HPN field, so that it is possible to make the length (size) of the RAR format six octets, which is the same as the conventional RAR. Also, since it is not necessary to report UL grants apart from the RAR, it is possible to reduce the decrease of spectral efficiency.

### < Method 4 of the first embodiment (embodiment 1.4)>

With embodiment 1.4, part of the TC-RNTI field in the conventional RAR is used as an HPN field. For example, the first three bits of the TC-RNTI field in the fifth octet of the RAR are made an HPN field. In this case, a UE controls PUSCH transmission/retransmission based on UL grants included in the RAR, and therefore does not have to receive UL grants apart from the RAR.

Note that, as explained earlier with the variation of embodiment 1.1, since a UE where an RRC connection is already established does not need a TC-RNTI, it is possible to remove the TC-RNTI field from the RAR.

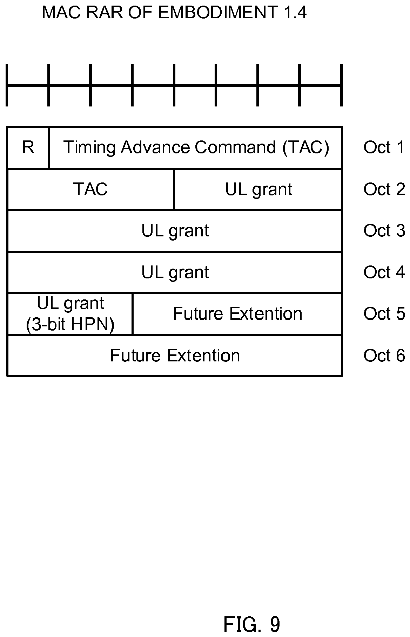

FIG. 9 is a diagram to show an example of the MAC RAR format according to embodiment 1.4. In comparison to the MAC RAR of FIG. 3A, in the MAC RAR of FIG. 9, the first three bits of the TC-RNTI field are re-defined as an HPN field. Also, the remaining thirteen bits, which would heretofore have been the TC-RNTI field, may be reserves as bits (field) for future extension.

As described above, according to embodiment 1.4, part of the conventional TC-RNTI field is used as an HPN field, so that it is possible to make the length (size) of the RAR format six octets, which is the same as the conventional RAR. Also, since it is not necessary to report UL grants apart from the RAR, it is possible to reduce the decrease of spectral efficiency.

### <Variation of the first embodiment>

Note that the various RAR formats described above can be implemented as modified examples by changing the order information is arranged in the format, by changing the length of fields, by adding and/or removing fields, and so on.

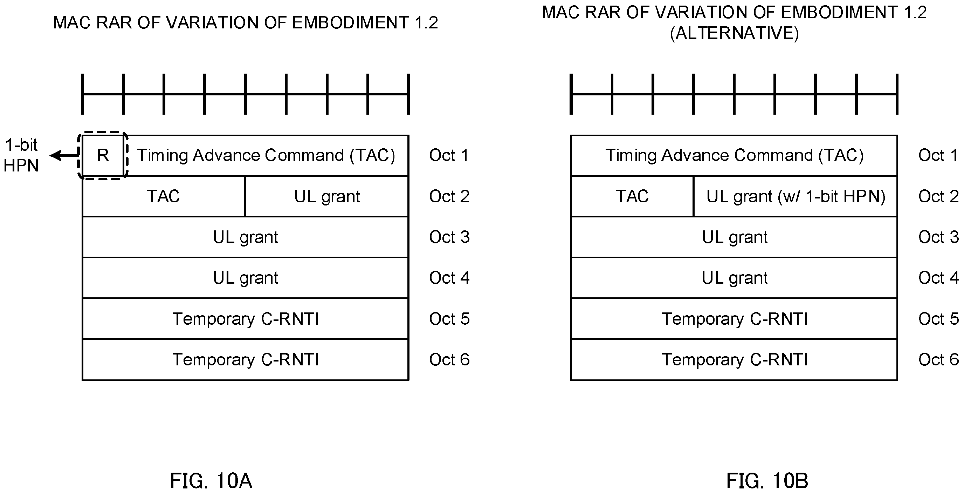

For example, if the number of HARQ processes in LAA SCells is maximum two (determined by, for example, the limitation of the maximum DL + UL burst length), it is sufficient to use only one bit as an HPN field. In this case, for example, as shown in FIGs. 10, it is possible to include information about an HPN without changing the length of the conventional RAR format.

FIGs. 10 provide a diagram to show an example of the MAC RAR format according to a variation of embodiment 1.2. Unlike the MAC RAR of FIG. 7, in which three bits are added as an HPN field for a UL grant, the MAC RAR of FIG. 10A uses the reserved bit of the conventional RAR as an HPN field. Also, the MAC RAR of FIG. 10B removes the reserved bit from the conventional RAR, and uses one bit for an HPN field for a UL grant.

Also, referring back to embodiments 1.2 to 1.4, the size of the HPN field may be determined based on the maximum number of HARQ processes in the LAA SCell. Also, the size of the fields (for example, the TAC field, the TC-RNTI field, etc.) that are removed upon addition of an HPN field may also be determined based on the size of the HPN field. For example, if an HPN field can be represented with two bits, in embodiment 1.3, it is possible to reduce the TAC field only by two bits, from eleven bits to nine bits.

Also, it is possible to remove the TC-RNTI field, or to only reduce the bits thereof. Also, the reserved field may be removed, or may be increased. Also, bits (field) for future extension may be added.

Note that, referring back to embodiments 1.2 to 1.4, if a RAR has a different size from the conventional RAR, RAPIDs may be reserved for this RAR, apart from the RAPIDs for the conventional RAR, as described earlier with embodiment 1.1. Also, when a plurality of RAR formats are defined (for example, when the conventional format, the format of embodiment 1.1 and the format of embodiment 1.3 can be used), it is possible to define a plurality groups (for example, three or more groups) so that different RAPIDs are selected for every RAR format.

Also, a UE may receive information related to RAPID groups (for example, information about the relationship between RAPIDs and RAR formats) via higher layer signaling (for example, RRC signaling, broadcast information, etc.), downlink control information (DCI) or the combination of these. By using the information about the relationship, the UE can judge the size of the RAR corresponding to an RAPID.

Also, in each embodiment, the information about an HPN needs not be placed in the HPN field, and can be joint-encoded with information in other fields.

### <Second embodiment>

Unlike the first embodiment, according to a second embodiment of the present invention, the MAC RAR format is not modified (that is, kept as heretofore). Meanwhile, HPNs to correspond to UL grants included in the RAR are specified.

### <Method 1 of the second embodiment (embodiment 2.1)>

In embodiment 2.1, as an HPN to correspond to the UL grants included in the RAR, one HPN is assigned fixedly. For example, if the HPN field can be represented with three bits, one HPN (for example, the HPN value = 7) is reserved as an HPN to correspond to the UL grants included in the RAR, and is not allowed to be used as an HPN to correspond to the UL grants that are specified in DCI format 0/4. Also, HPNs other than this one HPN can be used as HPNs to correspond to the normal UL grants that are specified in DCI format 0/4.

That is, embodiment 2.1 assumes a structure in which HPNs are divided into two groups (HPN groups), and in which the HPN to use for the UL grants included in the RAR is assigned from one group, and the HPNs to correspond to the UL grants that are specified in DCI format 0/4 are assigned from the other group.

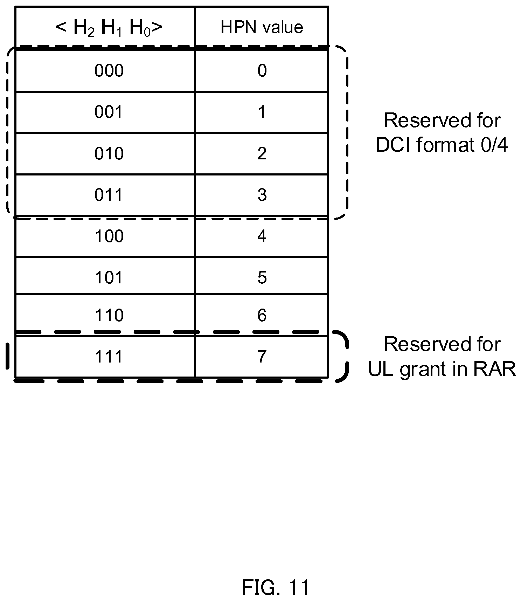

FIG. 11 is a diagram to show an example of HPN assignment according to embodiment 2.1. In FIG. 11, the HPN field (<H₂H₁H₀> = "111") to correspond to the HPN value = 7 is reserved for the UL grants in the RAR, and the HPN fields (<H₂H₁H₀> = "000" to "011") to correspond to the HPN values = 0 to 3 are reserved for DCI format 0/4.

Note that, since FIG. 11 presumes an environment in which the burst length of uplink and/or downlink transmission in LAA (LAA SCell) is maximum 4 ms, four HPNs suffice for the DCI format (the number of HARQ processes is maximum four). In this way, it is possible to determine the number of HPNs to assign to DCI format 0/4 based on the maximum transmission burst length in LAA.

Note that, in embodiment 2.1, a UE may receive information about the HPN groups (for example, information about the relationship between the HPN to correspond to the UL grants included in the RAR and the HPN field) via higher layer signaling (for example, RRC signaling, broadcast information, etc.), downlink control information (DCI) or the combination of these. The UE can receive update the HPN to use for the UL grants included in the RAR by using the reported information about the relationship.

As described above, with embodiment 2.1, it is not necessary to change the RAR format from the convention one, so that it is possible to reduce the increase of processing load or the volume of communication in a UE, and therefore reduce the decrease of spectral efficiency.

### <Method 2 of the second embodiment (embodiment 2.2)>

With embodiment 2.2, an HPN to correspond to the UL grants included in the RAR is included in a downlink L1/L2 control channel (PDCCH) that commands PRACH transmission in an SCell, and is transmitted in the PCell.

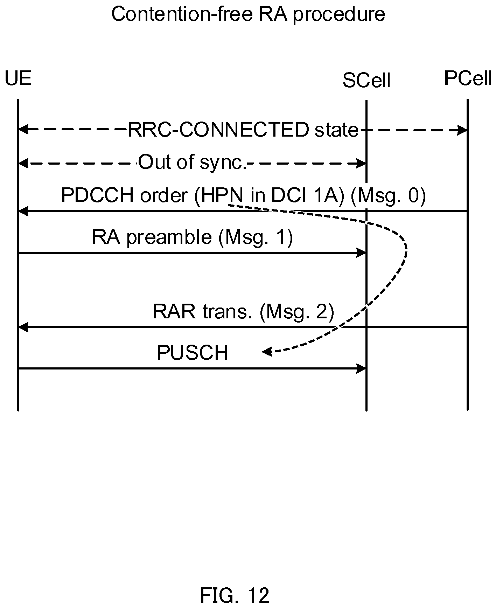

FIG. 12 is a diagram to show an example sequence of random access procedures according to embodiment 2.2. The flow of the procedures of FIG. 12 is the same as in FIG. 1.

In the example of FIG. 12, command information, in which an HPN field is added to conventional DCI format 1A, which is used in initialization in contention-free random access procedures, is reported to a UE as message 0. The UE transmits the PRACH based on this command information, and, if a RAR in response to the PRACH is later detected in the PCell, assumes that the HPN corresponding to the UL grants in the RAR is the HPN included in message 0, and carries out the HARQ process accordingly.

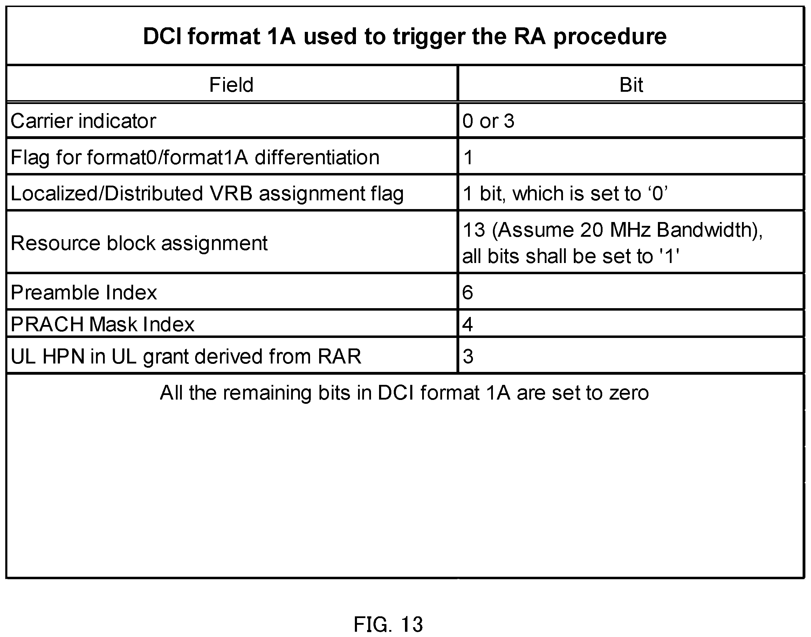

FIG. 13 is a diagram to show an example of a DCI format including an HPN according to embodiment 2.2. Although FIG. 13 shows an example in which the uplink bandwidth is 20 MHz, this is by no means limiting. DCI format 1A shown in FIG. 13 is formed by including a field (three bits) to show an HPN (UL HPN) that corresponds to UL grants that are derived from the RAR, in addition to the fields included in conventional DCI format 1A.

By employing this structure, it is possible to easily specify the HPN that corresponds to the UL grants in the RAR. Note that, when DCI format 1A of FIG. 13 including an HPN is used in contention-free random access procedures in a carrier where LBT is not configured, a UE may execute HARQ control by applying an HPN that is reported, to the UL grants in the RAR, or may disregard an HPN that is reported, and use conventional HARQ control.

As described above, according to embodiment 2.2, an HPN to correspond to the UL grants in the RAR can be reported by using the zero padding field in conventional DCI format 1A, so that it is not necessary to change the RAR format from the conventional one. By this means, it is possible to reduce the increase of processing load or the volume of communication in a UE, and therefore reduce the decrease of spectral efficiency.

### (Radio Communication System)

Now, the structure of the radio communication system according to an embodiment of the present invention will be described below. In this radio communication system, the radio communication methods according to the above-described embodiments of the present invention are employed. Note that the radio communication methods of the above-described embodiments may be applied individually or may be applied in combination.

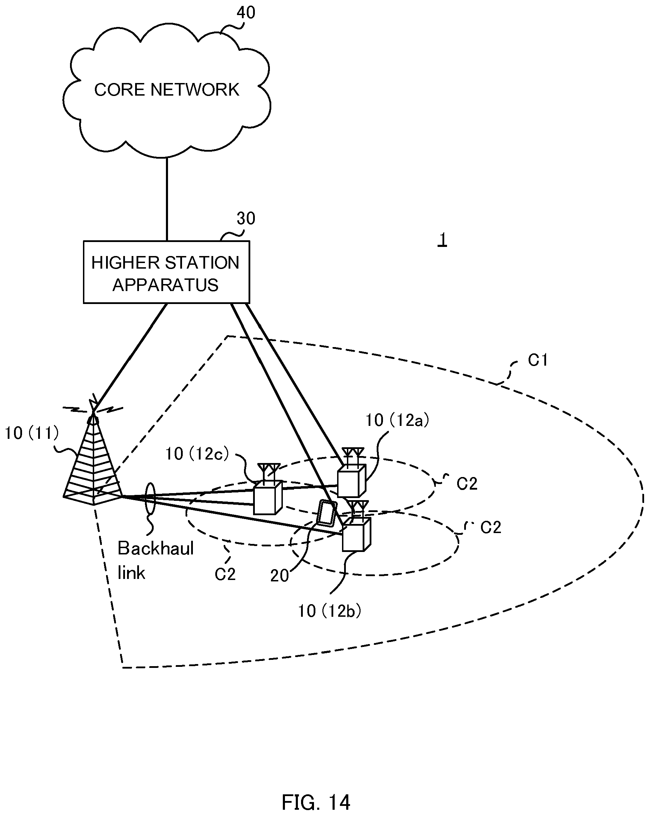

FIG. 14 is a diagram to show an example of a schematic structure of a radio communication system according to an embodiment of the present invention. The radio communication system 1 can adopt carrier aggregation (CA) and/or adopt dual connectivity (DC) to group a plurality of fundamental frequency blocks (component carriers) into one, where the LTE system bandwidth constitutes one unit. Also, the radio communication system 1 has a radio base station (for example, an LTE-U base station) that is capable of using unlicensed bands.

Note that the radio communication system 1 may be referred to as "SUPER 3G," "LTE-A," (LTE-Advanced), "IMT-Advanced," "4G" (4th generation mobile communication system), "5G" (5th generation mobile communication system), "FRA" (Future Radio Access) and so on.

The radio communication system 1 shown in FIG. 8 includes a radio base station 11 that forms a macro cell C1, and radio base stations 12 (12a to 12c) that form small cells C2, which are placed within the macro cell C1 and which are narrower than the macro cell C1. Also, user terminals 20 are placed in the macro cell C1 and in each small cell C2. For example, a mode may be possible in which the macro cell C1 is used in a licensed band and the small cells C2 are used in unlicensed bands (LTE-U). Also, a mode may be also possible in which part of the small cells is used in a licensed band and the rest of the small cells are used in unlicensed bands.

The user terminals 20 can connect with both the radio base station 11 and the radio base stations 12. The user terminals 20 may use the macro cell C1 and the small cells C2, which use different frequencies, at the same time, by means of CA or DC. For example, it is possible to transmit assist information (for example, the DL signal configuration) related to a radio base station 12 (which is, for example, an LTE-U base station) that uses an unlicensed band, from the radio base station 11 that uses a licensed band to the user terminals 20. Here, a structure may be employed in which, when CA is used between the licensed band and the unlicensed band, one of the radio base stations (for example, the radio base station 11) controls the scheduling of the licensed band cells and the unlicensed band cells.

Note that it is equally possible to use a structure in which a user terminal 20 connects with a radio base station 12, without connecting with the radio base station 11. For example, it is possible to use a structure in which a radio base station 12 that uses an unlicensed band connects with the user terminals 20 in stand-alone. In this case, the radio base station 12 controls the scheduling of unlicensed band cells.

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the configuration of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (Home eNodeBs), "RRHs" (Remote Radio Heads), "transmitting/receiving points" and so on. Hereinafter the radio base stations 11 and 12 will be collectively referred to as "radio base stations 10," unless specified otherwise. Also, it is preferable to configure radio base stations 10 that use the same unlicensed band on a shared basis to be synchronized in time.

The user terminals 20 are terminals to support various communication schemes such as LTE, LTE-A and so on, and may be either mobile communication terminals or stationary communication terminals.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency band into a plurality of narrow frequency bands (subcarriers) and mapping data to each subcarrier. SC-FDMA is a single-carrier communication scheme to mitigate interference between terminals by dividing the system band into bands formed with one or continuous resource blocks per terminal, and allowing a plurality of terminals to use mutually different bands. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, MIBs (Master Information Blocks) are communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI) including PDSCH and PUSCH scheduling information is communicated by the PDCCH. The number of OFDM symbols to use for the PDCCH is communicated by the PCFICH. HARQ delivery acknowledgement signals (ACKs/NACKs) in response to the PUSCH are communicated by the PHICH. The EPDCCH is frequency-division-multiplexed with the PDSCH, and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. The PUSCH may be referred to as an uplink data channel. User data and higher layer control information are communicated by the PUSCH. Also, downlink radio quality information (CQI: Channel Quality Indicator), delivery acknowledgment information (ACKs/NACKs) and so on are communicated by the PUCCH. By means of the PRACH, random access preambles for establishing connections with cells are communicated.

In the radio communication systems 1, cell-specific reference signals (CRSs), channel state information reference signals (CSI-RSs), demodulation reference signal (DMRSs) and so on are communicated as downlink reference signals. Also, in the radio communication system 1, measurement reference signals (SRSs: Sounding Reference Signals), demodulation reference signals (DMRSs) and so on are communicated as uplink reference signals. Note that, the DMRSs may be referred to as user terminal-specific reference signals (UE-specific Reference Signals). Also, the reference signals to be communicated are by no means limited to these.

### (Radio base station)

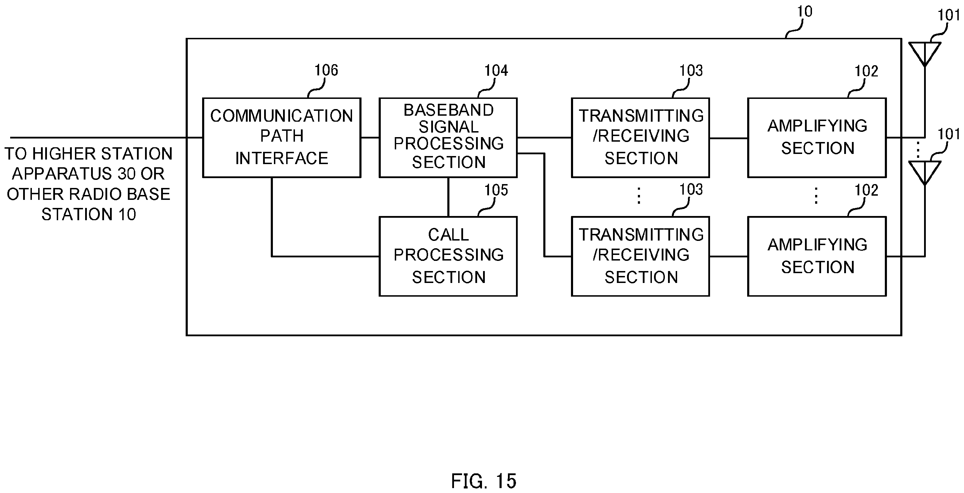

FIG. 15 is a diagram to show an example of an overall structure of a radio base station according to an embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are pre-coded and output from the baseband signal processing section 104 on a per antenna basis are converted into a radio frequency band in the transmitting/receiving sections 103, and then transmitted. The radio frequency signals subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving devices that can be described based on common understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. Each transmitting/receiving section 103 receives uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (for example, an interface in compliance with the CPRI (Common Public Radio Interface) such as optical fiber, the X2 interface, etc.).

Note that the transmitting/receiving sections 103 transmit downlink signals to the user terminal 20 by using a licensed band cell and/or an unlicensed band cell. For example, the transmitting/receiving sections 103 can transmit RARs in a licensed band. Also, the transmitting/receiving sections 103 may transmit UL grants that include information about HPNs (extended DCI format 0/4) in a licensed band and/or an unlicensed band, or transmit RARs that include information about HPNs in an unlicensed band. Also, the transmitting/receiving sections 103 may transmit downlink control information (extended DCI format 1A) related to RA preambles and HPNs to correspond to RAR UL grants, which are to be transmitted in an unlicensed band, in a licensed band and/or in an unlicensed band.

Also, the transmitting/receiving section 103 receive the PRACH (RA preamble) from the user terminal 20 in an unlicensed band. Also, the transmitting/receiving sections 103 may receive the PUSCH from the user terminal 20 in an unlicensed band.

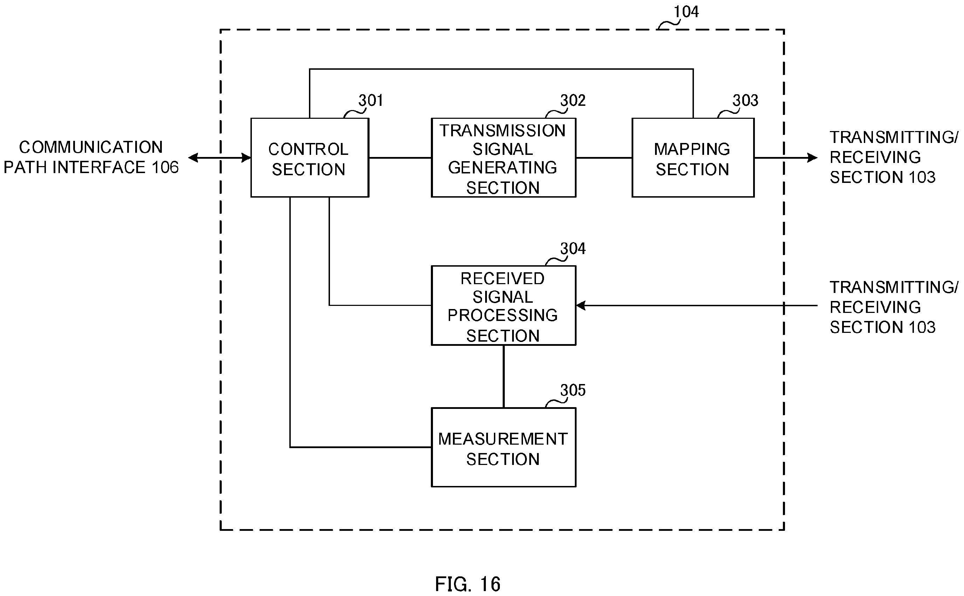

FIG. 16 is a diagram to show an example of a functional structure of a radio base station according to one embodiment of the present invention. Note that, although FIG. 10 primarily shows functional blocks that pertain to characteristic parts of the present embodiment, the radio base station 10 has other functional blocks that are necessary for radio communication as well. As shown in FIG. 16, the baseband signal processing section 104 has a control section (scheduler) 301, a transmission signal generating section (generating section) 302, a mapping section 303, a received signal processing section 304 and a measurement section 305.

The control section (scheduler) 301 controls the whole of the radio base station 10. Note that, when a licensed band and an unlicensed band are scheduled with one control section (scheduler) 301, the control section 301 controls communication in the licensed band cells and the unlicensed band cells. For the control section 301, a controller, a control circuit or a control device that can be described based on common understanding of the technical field to which the present invention pertains can be used.

The control section 301, for example, controls the generation of signals in the transmission signal generating section 302, the allocation of signals by the mapping section 303, and so on. Furthermore, the control section 301 controls the signal receiving processes in the received signal processing section 304, the measurements of signals in the measurement section 305, and so on.

The control section 301 controls the scheduling (for example, resource allocation) of downlink data signals that are transmitted in the PDSCH and downlink control signals that are communicated in the PDCCH and/or the EPDCCH. Also, the control section 301 controls the scheduling of downlink reference signals such as synchronization signals (the PSS (Primary Synchronization Signal) and the SSS (Secondary Synchronization Signal)), the CRS, the CSI-RS, the DM-RS and so on.

Also, the control section 301 controls the scheduling of uplink data signals transmitted in the PUSCH, uplink control signals transmitted in the PUCCH and/or the PUSCH (for example, delivery acknowledgement signals (HARQ-ACKs)), random access preambles transmitted in the PRACH, uplink reference signals and so on.

The control section 301 controls the transmission of downlink signals in the transmission signal generating section 302 and the mapping section 303 in accordance with the results of LBT acquired in the measurement section 305. Also, the control section 301 controls the RA procedures in the user terminal 20. For example, the control section 301 may perform control to transmit information that commands PRACH transmission to the user terminal 20 in a licensed band.

The control section 301 performs control to transmit information that relates to HPNs that correspond to uplink signals which the user terminal 20 transmits/retransmits in an uplink shared channel (for example, the PUSCH) of an unlicensed band after receiving the RAR, to the user terminal 20.

To be more specific, the control section 301 may perform control to include the above HPN-related information in UL grants apart from those in the RAR (for example, extended DCI format 0/4) (embodiment 1.1). Also, the control section 301 may perform control to include the above HPN-related information in the RAR (embodiments 1.2 to 1.4).

Also, the control section 301 may perform control to generate information that relates to the relationship between an HPN to corresponds to the UL grants included in the RAR and HPN fields, and report this information to the user terminal 20 (embodiment 2.1). Also, the control section 301 may perform control to include an HPN to correspond to the UL grants included in the RAR in a downlink L1/L2 control channel (PDCCH) that commands PRACH transmission in an unlicensed band (embodiment 2.2).

Note that, when a RAR having a size other than six octets is included in the MAC PDU, the control section 301 may perform control to include, in MAC subheaders, RAPIDs that are selected from an RAPID group apart from an RAPID group of a size of six octets.

The transmission signal generating section 302 generates downlink signals (downlink control signals, downlink data signals, downlink reference signals and so on) based on commands from the control section 301, and outputs these signals to the mapping section 303. The transmission signal generating section 302 can be constituted by a signal generator, a signal generating circuit or a signal generating device that can be described based on common understanding of the technical field to which the present invention pertains.

For example, the transmission signal generating section 302 generates DL assignments, which report downlink signal allocation information, and UL grants, which report uplink signal allocation information, based on commands from the control section 301. Also, the downlink data signals are subjected to the coding process, the modulation process and so on, by using coding rates and modulation schemes that are determined based on, for example, channel state information (CSI: Channel State Information) reported from each user terminal.

The mapping section 303 maps the downlink signals generated in the transmission signal generating section 302 to predetermined radio resources based on commands from the control section 301, and outputs these to the transmitting/receiving sections 103. The mapping section 303 can be constituted by a mapper, a mapping circuit or a mapping device that can be described based on common understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminals 20 (uplink control signals, uplink data signals, uplink reference signals and so on). The received signal processing section 304 can be constituted by a signal processor, a signal processing circuit or a signal processing device that can be described based on common understanding of the technical field to which the present invention pertains.

The received signal processing section 304 outputs the decoded information acquired through the receiving processes to the control section 301. For example, when a PUCCH to contain an HARQ-ACK is received, the received signal processing section 304 outputs this HARQ-ACK to the control section 301. Also, the received signal processing section 304 outputs the received signals, the signals after the receiving processes and so on, to the measurement section 305.

The measurement section 305 conducts measurements with respect to the received signals. The measurement section 305 can be constituted by a measurer, a measurement circuit or a measurement device that can be described based on common understanding of the technical field to which the present invention pertains.

The measurement section 305 executes LBT in a carrier where LBT is configured (for example, an unlicensed band) based on commands from the control section 301, and outputs the results of LBT (for example, judgments as to whether the channel state is idle or busy) to the control section 301.

Also, by using the receive signals, the received signal processing section 404 may measure the received power (for example, the RSRP (Reference Signal Received Power)), the received quality (RSRQ (Reference Signal Received Quality)), channel states and so on. The measurement results may be output to the control section 301.

### (User terminal)

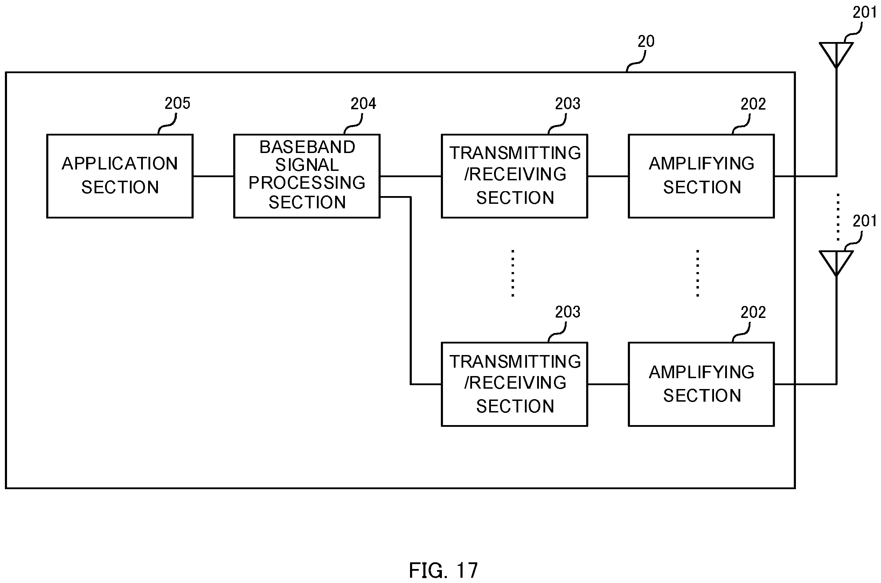

FIG. 17 is a diagram to show an example of an overall structure of a user terminal according to an embodiment of the present invention. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in a plurality of transmitting/receiving antennas 201 are each amplified in the amplifying sections 202. Each transmitting/receiving section 203 receives the downlink signals amplified in the amplifying sections 202. The received signals are subjected to frequency conversion and converted into the baseband signal in the transmitting/receiving sections 203, and output to the baseband signal processing section 204. The transmitting/receiving sections 203 are capable of transmitting/receiving UL/DL signals in unlicensed bands. Note that the transmitting/receiving sections 203 may be capable of transmitting/receiving UL/DL signals in licensed bands as well.

The transmitting/receiving sections 203 can be constituted by transmitters/receivers, transmitting/receiving circuits or transmitting/receiving devices that can be described based on common understanding of the technical field to which the present invention pertains. Note that a transmitting/receiving section 203 may be structured as a transmitting/receiving section in one entity, or may be constituted by a transmitting section and a receiving section.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to each transmitting/receiving section 203. The baseband signal that is output from the baseband signal processing section 204 is converted into a radio frequency band in the transmitting/receiving sections 203. The radio frequency signals that are subjected to frequency conversion in the transmitting/receiving sections 203 are amplified in the amplifying sections 202, and transmitted from the transmitting/receiving antennas 201.

The transmitting/receiving sections 203 each receive the downlink signals transmitted form the radio base station 10 by using both licensed band cells and unlicensed band cells. For example, the transmitting/receiving sections 203 receive RARs in a licensed band. Also, the transmitting/receiving sections 203 may receive UL grants (extended DCI format 0/4) that include information about HPNs in a licensed band and/or an unlicensed band, and receive RARs that include information about HPNs in an unlicensed band. Also, the transmitting/receiving section 203 may receive downlink control information (extended DCI format 1A) related to RA preambles and HPNs to correspond to RAR UL grants, which are to be transmitted in an unlicensed band, in a licensed band and/or in an unlicensed band.

Also, the transmitting/receiving sections 203 transmit the PRACH (RA preamble) to the radio base station 10 in an unlicensed band. Also, after the RAR is received, the transmitting/receiving sections 203 transmit the PUSCH, in an unlicensed band by using resources specified by the radio base station 10.

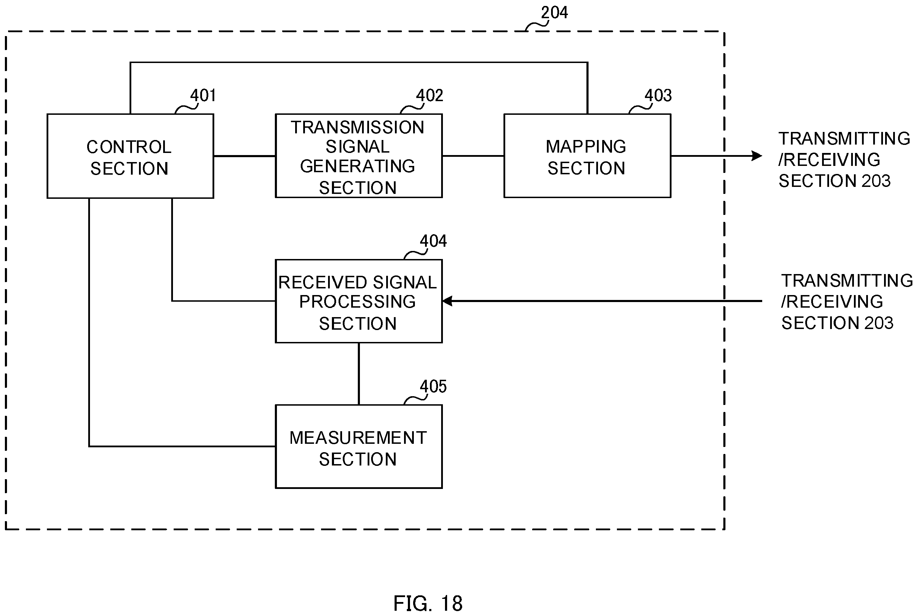

FIG. 18 is a diagram to show an example of a functional structure of a user terminal according to one embodiment of the present invention. Note that, although FIG. 18 primarily shows functional blocks that pertain to characteristic parts of the present embodiment, the user terminal 20 has other functional blocks that are necessary for radio communication as well. As shown in FIG. 18, the baseband signal processing section 204 provided in the user terminal 20 at least has a control section 401, a transmission signal generating section 402, a mapping section 403, a received signal processing section 404 and a measurement section 405.

The control section 401 controls the whole of the user terminal 20. The control section 401 can be constituted by a controller, a control circuit or a control device that can be described based on common understanding of the technical field to which the present invention pertains.

The control section 401, for example, controls the generation of signals in the transmission signal generating section 402, the allocation of signals by the mapping section 403, and so on. Furthermore, the control section 401 controls the signal receiving processes in the received signal processing section 404, the measurements of signals in the measurement section 405, and so on.

The control section 401 acquires the downlink control signals (signals transmitted in the PDCCH/EPDCCH) and downlink data signals (signals transmitted in the PDSCH) transmitted from the radio base station 10, from the received signal processing section 404. The control section 401 controls the generation of uplink control signals (for example, delivery acknowledgement signals (HARQ-ACKs) and so on) and uplink data signals based on the downlink control signals, the results of deciding whether or not retransmission control is necessary for the downlink data signals, and so on.

The control section 401 controls the transmission of uplink signals in the transmission signal generating section 402 and the mapping section 403 in accordance with the results of LBT acquired in the measurement section 405. Also, the control section 401 carries out RA procedures in an unlicensed band. Furthermore, the control section 401 controls the transmission signal generating section 402 and the mapping section 403 to transmit/retransmit uplink signals in an uplink shared channel (for example, the PUSCH) of an unlicensed band, after the RAR is received. Here, the control section 401 acquires information about the HPNs that correspond to the uplink signals and performs retransmission control over the uplink signals by using these HPNs.

To be more specific, the control section 401 may acquire HPNs that are extracted from UL grants (for example, extended DCI format 0/4) apart from those included in the RAR, from the received signal processing section 404 (embodiment 1.1). Also, the control section 401 may acquire HPNs extracted from the RAR from the received signal processing section 404 (embodiments 1.2 to 1.4).

Also, the control section 401 may acquire an HPN to correspond to the UL grants included in the RAR based on information about the relationship with an HPN field (embodiment 2.1). Also, the control section 401 may see this HPN to correspond to the UL grants included in the RAR as an HPN extracted from a downlink L1/L2 control channel (PDCCH) that commands PRACH transmission in an unlicensed band (embodiment 2.2).

Note that the control section 401 can identify RARs having a size other than six octets based on RAPIDs in MAC subheaders.

The transmission signal generating section 402 generates uplink signals (uplink control signals, uplink data signals, uplink reference signals and so on) based on commands from the control section 401, and outputs these signals to the mapping section 403. The transmission signal generating section 402 can be constituted by a signal generator, a signal generating circuit or a signal generating device that can be described based on common understanding of the technical field to which the present invention pertains.

For example, the transmission signal generating section 402 generates uplink control signals such as delivery acknowledgement signals (HARQ-ACKs), channel state information (CSI) and so on, based on commands from the control section 401. Also, the transmission signal generating section 402 generates uplink data signals based on commands from the control section 401. For example, when a UL grant is included in a downlink control signal that is reported from the radio base station 10, the control section 401 commands the transmission signal generating section 402 to generate an uplink data signal.

The mapping section 403 maps the uplink signals generated in the transmission signal generating section 402 to radio resources based on commands from the control section 401, and output the result to the transmitting/receiving sections 203. The mapping section 403 can be constituted by a mapper, a mapping circuit or a mapping device that can be described based on common understanding of the technical field to which the present invention pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or a signal processing device that can be described based on common understanding of the technical field to which the present invention pertains. Also, the received signal processing section 404 can constitute the receiving section according to the present invention.

The received signal processing section 404 output the decoded information that is acquired through the receiving processes to the control section 401. The received signal processing section 404 outputs, for example, broadcast information, system information, RRC signaling, DCI and so on, to the control section 401. Also, the received signal processing section 404 outputs the received signals, the signals after the receiving processes and so on to the measurement section 405.

The measurement section 405 conducts measurements with respect to the received signals. The measurement section 405 can be constituted by a measurer, a measurement circuit or a measurement device that can be described based on common understanding of the technical field to which the present invention pertains.

The measurement section 405 executes LBT in a carrier where LBT is configured (for example, an unlicensed band) based on commands from the control section 401, and outputs the results of LBT (for example, judgments as to whether the channel state is idle or busy) to the control section 401.

Also, the measurement section 405 may measure the received power (for example, RSRP), the received quality (for example, RSRQ), the channel states and so on of the received signals. The measurement results may be output to the control section 401.

Note that the block diagrams that have been used to describe the above embodiments show blocks in functional units. These functional blocks (components) may be implemented in arbitrary combinations of hardware and software. Also, the means for implementing each functional block is not particularly limited. That is, each functional block may be implemented with one physically-integrated device, or may be implemented by connecting two physically-separate devices via radio or wire and using these multiple devices.

For example, part or all of the functions of radio base stations 10 and user terminals 20 may be implemented using hardware such as ASICs (Application-Specific Integrated Circuits), PLDs (Programmable Logic Devices), FPGAs (Field Programmable Gate Arrays), and so on. Also, the radio base stations 10 and user terminals 20 may be implemented with a computer device that includes a processor (CPU), a communication interface for connecting with networks, a memory and a computer-readable storage medium that holds programs. That is, radio base stations and user terminals according to an embodiment of the present invention may function as computers that execute the processes of the radio communication method of the present invention.

Here, the processor and the memory are connected with a bus for communicating information. Also, the computer-readable recording medium is a storage medium such as, for example, a flexible disk, an opto-magnetic disk, a ROM, an EPROM, a CD-ROM, a RAM, a hard disk and so on. Also, the programs may be transmitted from the network through, for example, electric communication channels. Also, the radio base stations 10 and user terminals 20 may include input devices such as input keys and output devices such as displays.

The functional structures of the radio base stations 10 and user terminals 20 may be implemented with the above-described hardware, may be implemented with software modules that are executed on the processor, or may be implemented with combinations of both. The processor controls the whole of the user terminals by running an operating system. Also, the processor reads programs, software modules and data from the storage medium into the memory, and executes various types of processes.

Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Also, software and commands may be transmitted and received via communication media. For example, when software is transmitted from a website, a server or other remote sources by using wired technologies such as coaxial cables, optical fiber cables, twisted-pair cables and digital subscriber lines (DSL) and/or wireless technologies such as infrared radiation, radio and microwaves, these wired technologies and/or wireless technologies are also included in the definition of communication media.

Note that the terminology used in this description and the terminology that is needed to understand this description may be replaced by other terms that convey the same or similar meanings. For example, "channels" and/or "symbols" may be replaced by "signals" (or "signaling"). Also, "signals" may be "messages." Furthermore, "component carriers" (CCs) may be referred to as "carrier frequencies," "cells" and so on.

Also, the information and parameters described in this description may be represented in absolute values or in relative values with respect to a predetermined value, or may be represented in other information formats. For example, radio resources may be specified by indices.

The information, signals and/or others described in this description may be represented by using a variety of different technologies. For example, data, instructions, commands, information, signals, bits, symbols and chips, all of which may be referenced throughout the description, may be represented by voltages, currents, electromagnetic waves, magnetic fields or particles, optical fields or photons, or any combination of these.

The example s/embodiments illustrated in this description may be used individually or in combinations, and the mode of may be switched depending on the implementation. Also, a report of predetermined information (for example, a report to the effect that "X holds") does not necessarily have to be sent explicitly, and can be sent implicitly (by, for example, not reporting this piece of information).

Reporting of information is by no means limited to the example s/embodiments described in this description, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, MAC (Medium Access Control) signaling, and broadcast information (MIBs (Master Information Blocks) and SIBs (System Information Blocks))), other signals or combinations of these. Also, RRC signaling may be referred to as "RRC messages," and can be, for example, an RRC connection setup message, RRC connection reconfiguration message, and so on.

The examples/embodiments illustrated in this description may be applied to LTE (Long Term Evolution), LTE-A (LTE-Advanced), SUPER 3G, IMT-Advanced, 4G (4th generation mobile communication system), 5G (5th generation mobile communication system), FRA (Future Radio Access), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the example s/embodiments herein may be re-ordered as long as inconsistencies do not arise. For example, although various methods have been illustrated in this description with various components of steps in exemplary orders, the specific orders that illustrated herein are by no means limiting.

Now, although the present invention has been described in detail above, it should be obvious to a person skilled in the art that the present invention is by no means limited to the embodiments described herein. For example, the above-described embodiments may be used individually or in combinations. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2015-159889, filed on August 13, 2015, including the specification, drawings and abstract, is incorporated herein by reference in its entirety.

## Claims

1. A user terminal that communicates by using a first cell and a second cell, the second cell executing listening before transmitting signals, the user terminal comprising:
a receiving section that receives a random access response (RAR) in the first cell;
a transmission section that, after the RAR is received, transmits an uplink signal in an uplink shared channel of the second cell; and
a control section that performs retransmission control over the uplink signal,
wherein the control section acquires information related to a hybrid automatic repeat request (HARQ) process number that corresponds to the uplink signal, and performs the retransmission control over the uplink signal by using the HARQ process number.

2. The user terminal according to claim 1, wherein:
the receiving section receives scheduling information that includes the information related to the HARQ process number; and
the transmission section transmits the uplink signal based on the scheduling information.

3. The user terminal according to claim 2, wherein the RAR does not include an uplink (UL) grant field and/or a temporary cell radio network temporary identifier (TC-RNTI) field.

4. The user terminal according to claim 1, wherein:
the transmission section transmits the uplink signal based on an uplink (UL) grant field in the RAR; and
the RAR includes the information related to the HARQ process number.

5. The user terminal according to one of claim 4, wherein the RAR includes the information related to the HARQ process number in part of a timing advance command (TAC) field and/or a temporary cell radio network temporary identifier (TC-RNTI) field, and/or in a reserved field, the fields being included in a RAR of a conventional LTE system.

6. The user terminal according to one of claim 1 to claim 5, wherein a medium access control (MAC) subheader identifier that corresponds to the RAR is selected from candidates that are different from those of a MAC subheader identifier that corresponds to the conventional RAR having a size of six octets.

7. The user terminal according to claim 1, wherein:
the transmission section transmits the uplink signal based on an uplink (UL) grant field in the RAR; and
the control section acquires information related to a HARQ process number that is fixedly associated with the uplink signal.

8. The user terminal according to claim 1, wherein:
the transmission section transmits the uplink signal based on an uplink (UL) grant field in the RAR;
the receiving section receives downlink control information that includes information related to a random access preamble that is transmitted in the second cell; and
the downlink control information includes the information related to the HARQ process number.

9. A radio base station that communicates with a user terminal that communicates by using a first cell and a second cell, the second cell executing listening before transmitting signals, the radio base station comprising:
a transmission section that transmits a random access response (RAR) in the first cell;
a receiving section that, after the RAR is received, receives an uplink signal in an uplink shared channel of the second cell; and
a control section that performs retransmission control over the uplink signal,
wherein the control section acquires information related to a hybrid automatic repeat request (HARQ) process number that corresponds to the uplink signal, and performs the retransmission control over the uplink signal by using the HARQ process number.

10. A radio communication method for a user terminal that communicates by using a first cell and a second cell, the second cell executing listening before transmitting signals, the radio communication method comprising the steps of:
receiving a random access response (RAR) in the first cell;
after the RAR is received, transmitting an uplink signal in an uplink shared channel of the second cell; and
performing retransmission control over the uplink signal,
wherein, the controlling acquires information related to a hybrid automatic repeat request (HARQ) process number that corresponds to the uplink signal, and performs the retransmission control over the uplink signal by using the HARQ process number.
